# EUROPEAN PATENT APPLICATION

(11) **EP 4 786 741 A1**
(43) Date of publication of application: **05.08.2026**
(21) Application number: 26153830.0
(22) Date of filing: 23.01.2026
(51) Int. Cl.: F01D 11/08, F01D 25/12, F01D 25/24, C04B 35/80

(54) **CMC COMPONENT, BOAS ASSEMBLY, METHOD OF CONTROLLING COOLING AIR FLOW WITHIN A CMC COMPONENT, AND TURBINE ENGINE**

(30) Priority: 23.01.2025 US 202519035261
(71) Applicant: RTX Corporation, Farmington, CT 06032 (US)
(72) Inventor: WILKINS, Peter, Glastonbury, 06033 (US); LILES, Howard J., Newington, 06111 (US); GAO, Cheng, South Glastonbury, 06073 (US); WASSERMAN, David J., Hamden, 06517 (US); SMIDDY, Winston, South Windsor, 06074 (US); MILLER, Andrew S., Marlborough, 06447 (US)
(74) Representative: Dehns

(57) **Abstract**

A ceramic matrix composite (CMC) component (400) for a turbine engine (20) includes a base (410) having a radial outer surface (412) and a radial inner surface (415), a cooling cavity (460) within the base that extends from the radial outer surface (412) of the base into an interior region of the base, the cooling cavity having a cooling cavity opening (462) at the outer radial surface of the base and being defined by cavity side walls ( 464) and a cavity bottom wall (466), and a cover plate (200) covering the cooling cavity opening of the cooling cavity. The cover plate comprises an edge region (210) around the perimeter of the cover plate which is in contact with the base and a central recessed region (220) which extends into the cooling cavity. The central recessed region is defined by side walls (230) and a bottom wall (240) wherein each side wall of the central recessed region is spaced from a corresponding cavity side wall (464) and the bottom wall of the central recessed region is spaced from the cavity bottom wall. The central recessed region has a plurality of cooling air inlets (250) to permit cooling air to flow from a region above the cover plate into the cooling cavity.
The CMC component is a blade outer air seal (BOAS) segment. A BOAS assembly comprising a plurality of the BOAS segments arranged to form an annular shaped structure.
A method of controlling cooling air flow within a CMC component for a turbine engine includes providing the CMC component; and covering the cooling cavity opening of the cooling cavity with the cover plate.
The turbine engine includes a fan section (22), a compressor section (24), a combustion chamber (26), and a turbine section (28), the turbine section (28) including at least one rotor and one or more turbine blade(s) extending radially outwardly from the at least one rotor; and the blade outer air seal assembly positioned between the one or more turbine blade(s) and an outer casing to the engine.

## Description

### FIELD OF THE INVENTION

The present disclosure relates generally to methods for manufacturing ceramic matrix composites (CMCs). In particular, the present disclosure concerns manufacturing CMC components with structures to facilitate cooling and directing/controlling the flow of cooling air.

### BACKGROUND OF THE INVENTION

Gas turbine engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Certain components of gas turbine engines are thus exposed to the high-energy, high temperature gas flow (flow path components). Therefore, it is desirable that such flow path components be made of heat resistant materials, for example, superalloys and ceramic matrix composites (CMCs). While these materials are heat resistant, to increase the operational lifespan of turbine engine components made of these materials can be provided with structures to permit the flow of cooling fluid (e.g., cooling air) to interact with and cool the component.

While CMC materials can withstand much higher operating temperatures than components composed of superalloys, CMCs have comparably lower thermal conductivity than superalloys. Thus, it is particularly desirable to take steps to efficiently cool CMC components using available cooling air flows. CMC components can be provided with cooling cavities to allow cooling air to penetrate into the interior of the CMC component and provide cooling thereof. Controlling flow into and within the cooling cavities can increase the efficiency of the cooling process.

There is thus a continuing need for providing alternative and/or improved cooling structures and methods for manufacturing such cooling structures in CMC that allow for efficient and effective cooling of CMC components exposed to high temperature gas flow.

### SUMMARY OF THE INVENTION

In general, the present invention relates to methods and devices for directing cooling air in conjunction with cooling CMC components, particularly cover plates used for directing/controlling cooling air flow into cooling cavities within CMC components such as blade outer air seals (BOAS).

The present invention is directed, in a first aspect, to a ceramic matrix composite (CMC) component comprising:
a base having a radial outer surface and a radial inner surface inward surface, the base comprising a plurality of ceramic fiber plies and a ceramic matrix,
   at least one cooling cavity within the base that extends from the outer radial surface of the base into an interior region of the base, the at least one cooling cavity having a cavity opening at the outer radial surface of the base, and the at least one cooling cavity being defined by cavity side walls and a cavity bottom wall, and
a cover plate covering the cavity opening of the at least one cooling cavity, the cover plate comprises an edge region around the perimeter of the cover plate which is in contact with the base and a central recessed region which extends into the cooling cavity, the central recessed region is defined by side walls and a bottom wall wherein each side wall of the central recessed region is spaced from a corresponding cavity side wall and the bottom wall of the central recessed region is spaced from the cavity bottom wall, and the central recessed region has a plurality of cooling air inlets to permit cooling air to flow from a region above the cover plate into the cooling cavity.

The present invention is also directed, in a further aspect, to a method of controlling cooling air flow within a CMC component, the method comprising:
providing a CMC component comprising:
   a base having a radial outer surface and a radial inner surface inward surface, the base comprising a plurality of ceramic fiber plies and a ceramic matrix, and
   at least one cooling cavity within the base that extends from the outer radial surface of the base into an interior region of the base, the at least one cooling cavity having a cavity opening at the outer radial surface of the base, and the at least one cooling cavity being defined by cavity side walls and a cavity bottom wall, and
covering the cavity opening of the at least one cooling cavity with a cover plate, the cover plate comprising an edge region around the perimeter of the cover plate which is in contact with the base of the CMC component, and a central recessed region which extends into the cooling cavity,
wherein the central recessed region is defined by side walls and a bottom wall wherein each side wall of the central recessed region is spaced from a corresponding cavity side wall and the bottom wall of the central recessed region is spaced from the cavity bottom wall, and the central recessed region has a plurality of cooling air inlets to permit cooling air to flow from a region above the cover plate into the cooling cavity.

The present invention is further directed, in an additional aspect, to a turbine engine comprising:
a fan section, a compressor section, a combustion chamber, and a turbine section, the turbine section including at least one rotor and one or more turbine blade(s) extending radially outwardly from the at least one rotor; and
a blade outer air seal assembly positioned between the one or more turbine blade(s) and an outer casing to the engine;
wherein the blade outer air seal assembly is formed of a plurality blade outer air seal segments, wherein each blade outer air seal segment comprises:
   a base having a radial outer surface and a radial inner surface inward surface, the base comprising a plurality of ceramic fiber plies and a ceramic matrix,
   at least one cooling cavity within the base that extends from the outer radial surface of the base into an interior region of the base, the at least one cooling cavity having a cavity opening at the outer radial surface of the base, and the at least one cooling cavity being defined by cavity side walls and a cavity bottom wall, and
   a cover plate covering the cavity opening of the at least one cooling cavity, the cover plate comprises an edge region around the perimeter of the cover plate which is in contact with the base and a central recessed region which extends into the cooling cavity, the central recessed region is defined by side walls and a bottom wall wherein each side wall of the central recessed region is spaced from a corresponding cavity side wall and the bottom wall of the central recessed region is spaced from the cavity bottom wall, and the central recessed region has a plurality of cooling air inlets to permit cooling air to flow from a region above the cover plate into the cooling cavity.

In an embodiment of the above, the plurality of cooling air inlets are in the bottom wall of the recessed region.

In an embodiment according to any of the previous embodiments, the base is made of a SiC/SiC composite.

In an embodiment according to any of the previous embodiments, cooling air inlets are provided in both the side walls and the bottom wall of the recessed region.

In an embodiment according to any of the previous embodiments, the base further includes at least one cooling air outlet channel that provides fluid communication between an interior of the at least one cooling cavity beneath the cover plate and an exterior of the CMC component.

In an embodiment according to any of the previous embodiments, the distance between the bottom wall of the recessed region and the cavity bottom wall is uniform.

In an embodiment according to any of the previous embodiments, the distance between each side wall of the recessed region and the corresponding cavity side wall is uniform.

In an embodiment according to any of the previous embodiments, the distance between the bottom wall of the recessed region and the cavity bottom wall varies.

In an embodiment according to any of the previous embodiments, the distance between each side wall of the recessed region and the corresponding cavity side wall varies.

In an embodiment according to any of the previous embodiments, the distance between the bottom wall of the recessed region and the cavity bottom is 0.005 to 0.5 inches (0.127 to 12.7 mm).

In an embodiment according to any of the previous embodiments, the distance between each side wall of the recessed region and the corresponding cavity side wall is 0.005 to 0.5 inches (0.127 to 12.7 mm).

In an embodiment according to any of the previous embodiments, the cover plate is made from a metallic material or a ceramic matrix composite material.

In an embodiment according to any of the previous embodiments, the edge region of the cover plate contacts the radial outer surface of the base.

In an embodiment according to any of the previous embodiments, the edge region of the cover plate contacts a shoulder region radial formed in the outer surface of the base and surrounding the at least one cooling cavity.

In an embodiment according to any of the previous embodiments, the component is a blade outer air seal (BOAS) segment.

In an embodiment according to any of the previous embodiments, the component is a BOAS assembly comprising a plurality of BOAS segments arranged to form an annular shaped structure.

In an embodiment according to any of the previous embodiments, the component is a combustor liner.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Fig. 1 schematically illustrates a partial cross section of an exemplary gas turbine engine.
Fig. 2 is a perspective view of a blade outer air seal (BOAS) segment.
Fig. 3 is a perspective view of a cover plate having a recessed region in accordance with the present disclosure.
Fig. 4 is a cross sectional view of an embodiment of a BOAS segment having a contoured cover plate with a recessed region.
Fig. 5 is a cross sectional view of another embodiment of a BOAS segment having a contoured cover plate with a recessed region.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

While the discussion below often makes reference to BOAS and BOAS segments, it should be recognized that the present disclosure is not limited to BOAS but includes other CMC components used within jet engines that may be exposed to high temperature gas flows, for example, other seals, vane airfoils and platforms therefor, and combustor liners.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces in the direction toward the flow of the hot gases, i.e., faces upstream. The trailing edge/portion of a structure is the edge/portion that the faces in the direction away from the flow of the hot gases, i.e., faces downstream.

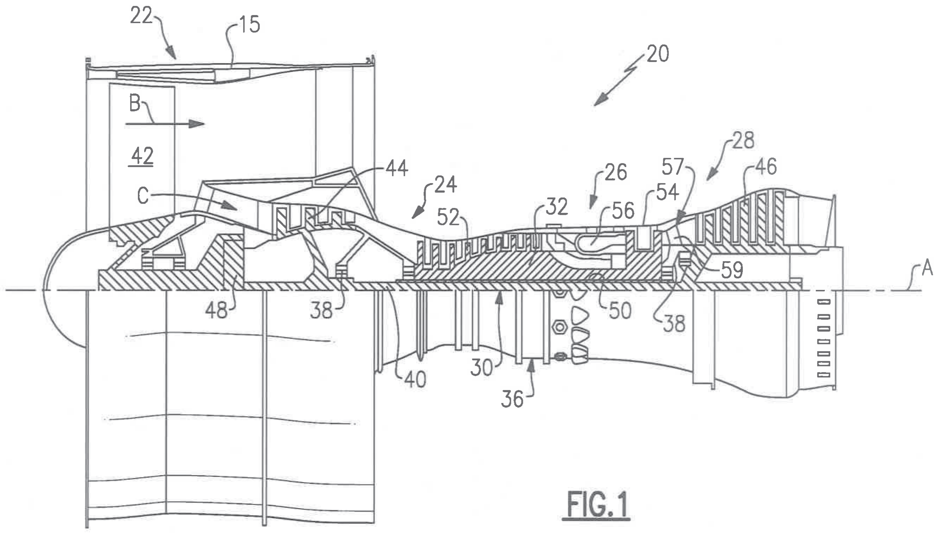

Fig. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

As noted above, jet engine components, such as BOAS, BOAS segments, other seals, vane airfoils and platforms therefor, blade airfoils and platforms therefor, and combustor liners, can be made from CMC materials. In general, these CMC components are prepared by first creating a CMC preform which serves as the initial framework for creating the CMC component. The preform contains a stack of fabric sheets or plies in which the stack is formed via a layup process. The plies are made from ceramic fibers, or bundles of ceramic fibers called tows, held together with a binder. The fiber tows can be in the form of unidirectional tows or can be woven fibers. For example, the fibers can be woven into a two-dimensional fabric sheet or ply and then the plies are stacked during the layup process to form the preform. Alternatively, the preform can be in the form of a three-dimensional weave wherein, for example, a plurality of warp fibers are interwoven through a plurality of weft fiber layers. Binders can be used to help hold the fibers/plies together to provide a certain rigidity to the preform, for example, polymeric binders such as polyvinyl alcohol (PVA) or polyvinyl butyral (PVB).

The fibers/filaments used in the CMC preforms may be, for example, silicon carbide (SiC), carbon, mullite, zirconium carbide (ZrC), hafnium carbide (HfC), silicon nitride, aluminum oxide, or combinations thereof. The ceramic fibers may also be oxycarbide-, oxynitride-, carbonitride-, silicate-, boride-, phosphide-, or oxide-based fibers. In still further examples, the fibers are fully crystalline, partially crystalline, or predominantly amorphous or glassy. In one particular example, the fibers are SiC fibers.

After the CMC preform is formed by the layup, the preform is subjected to densification to add matrix material to fill the remaining void spaces within the preform. This procedure stiffens and strengthens the fiber layers or woven plies of ceramic fiber tows to form the CMC. Thus, densification involves reducing the porosity within the preform, making it more solid and robust, by filing the remaining pores within the preform. The goal is to achieve a higher relative density, and ensure that the final CMC structure is compact and free of large voids. In one particular example, the CMC material contains SiC fibers within a SiC matrix, also referred to as a SiC/SiC composite.

Various methods can be used to add matrix material during densification. These include, but are not limited to, chemical vapor infiltration (CVI), melt infiltration (MI), for example, reactive melt infiltration (RMI) (such as liquid silicon infiltration (LSI)), and polymer infiltration and pyrolysis (PIP).

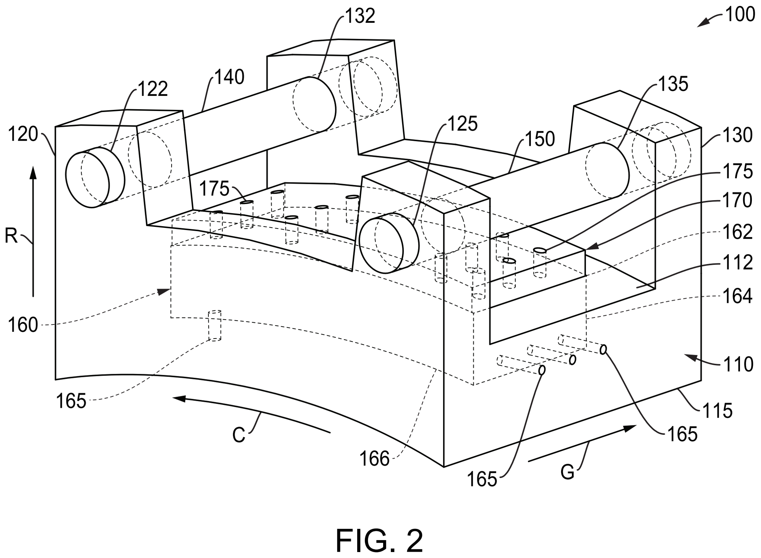

Fig. 2 illustrates a CMC component, specifically a blade outer air seal (BOAS) segment 100. In this figure, direction R indicates the radial direction, direction G indicates the axial direction or the direction of flow of hot gases through an engine, and direction C indicates a circumferential direction. The segment 100 includes a base 110 having a radial outer surface 112 and a radial inner surface 115. As shown in this embodiment, the radial outer surface 112 has a convex shape and the radial inner surface 115 has a concave shape. Segment 100 further includes a forward flange structure 120 and an aft flange structure 130. These two flange structures each extend from the radial outer surface 112 of the base 110. Flange structures 120, 130 are load bearing features and provide means for attaching the CMC component to another structure, for example, the outer casing of an engine. The base 110 and flanges structures 120, 130 are made of a CMC material comprising a plurality of ceramic fiber plies and a ceramic matrix.

The flange structures 120, 130 are provided with openings to permit the attachment of retention/supporting hardware. As shown in Fig. 2, the forward flange structure 120 has a first opening 122 and a second opening 125. The aft flange structure also has a first opening 132 and a second opening 135. Also shown in Fig. 2 are attachment pins 140 and 150. The first attachment pin 140 passes through the first opening 122 of the forward flange structure 120 and the first opening 132 of the aft flange structure 130. The second attachment pin 150 passes through the second opening 125 of the forward flange structure 120 and the second opening 135 of the second flange structure 130.

The base 110 is also provided with a cooling cavity 160. The cooling cavity 160 extends from the outer radial surface 112 of the base 110 into an interior region of the base 110 and has a cavity opening 162 at the outer radial surface of the base. The cooling cavity 160 is defined by cavity side walls 164 and a cavity bottom wall 166. Additionally, the cooling cavity 160 can be provided with one or more cooling air outlets 165 to provide for the discharge of cooling air from the cooling cavity. These cooling air outlets 165 can have an outlet discharge opening that is in radial inner surface 115 such that the discharged cooling air can provide a gas film cooling of radial inner surface 115. Alternatively, cooling air outlets 165 can have an outlet discharge opening in a side wall of the base 110 such that the discharged cooling air can provide a flow cooling to the region between adjacent BOAS segments. In Fig. 2, the cooling cavity 160 is covered by a cover plate or impingement plate 170 in which or more cooling holes 175 are provided to allow cooling air to enter the cooling cavity 160 through the cover plate/impingement plate 170.

The cooling cavity 160 can be formed in the base prior to densification of the CMC preform by precutting the fiber plies that are to be laid up to form the preform with a cavity or by cutting (machining) the cavity into the preform once the plies are laid up. Alternatively, the cooling cavity can be created by machining after an initial pre-densification, such as by chemical vapor infiltration (CVI), or after final densification.

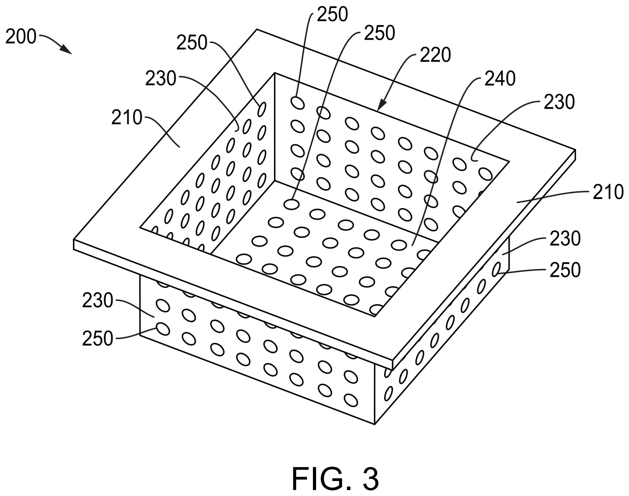

Fig. 3 shows a cover plate 200 according to the present disclosure for covering the cavity opening of a cooling cavity within a CMC component such as a BOAS segment. The cover plate 200 is contoured relative to the surfaces which are intended to be targeted by the cooling air passing through the cover plate, in this case the bottom wall and/or side walls of the cooling cavity. By contouring the cover plate 200 in this manner the distance between the cover plate can be controlled which in turn controls the impingement of the cooling impingement jets passing through the cover plate thereby controlling heat transfer.

In the embodiment of Fig. 3, the cover plate is shown as having an overall bathtub-like shape. The cover plate 200 has an edge region 210 around the perimeter of the cover plate and central recessed region 220 which is design to extend into a cooling cavity. The edge region 210 is designed to contact the base of a CMC component and thereby support the cover plate 200 when placed into position over the cooling cavity. The central recessed region 220 is defined by side walls 230 and a bottom wall 240. The side walls 230 and/or the central recessed region 220 of the cover plate 200 can be provided with one or more of cooling air inlets 250 to permit cooling air to flow from a region above cover plate 200 into a cooling cavity beneath cover plate 200. Cooling air passing through each cooling air inlet 250 creates an impingement jet of cooling air. This cooling air jet impinges on the surface directly opposite the cover plate 200 such as a cooling cavity bottom wall or cooling cavity side wall.

The cover plate of the present disclosure can be made from CMC materials or from metallic materials having sufficient temperature resistance to withstand the operating temperatures of the engine. Suitable metallic materials include superalloys such as Ni-based and Co-based superalloy materials. The cover plate can be held in position by a variety of means such as retainer clamps or tabs. For example, retainer tabs can extend downward from the flange structures or attachment pins to hold the cover plate in position. Alternatively, retainer tabs/clamps can extend from adjacent BOAS segments to hold the cover plate in position. Additionally, retainer springs members that interact with, for example, attachment pins and/or tabs extending from the flange structures, can be used to hold the cover plate in position.

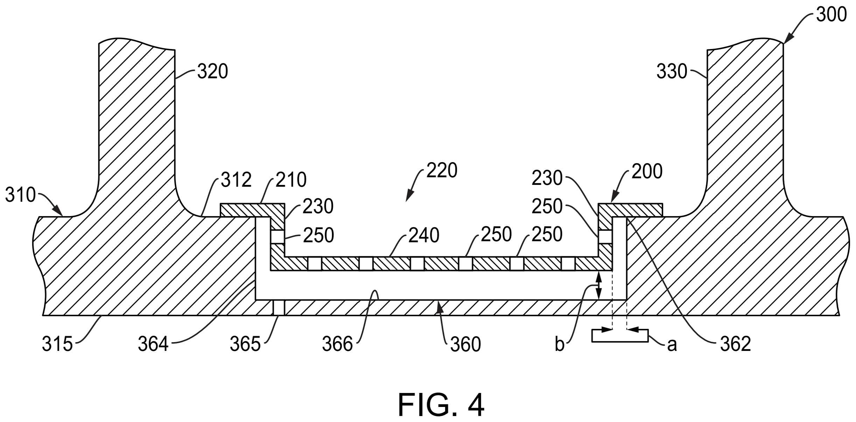

Fig. 4 shows a cross section of a BOAS segment 300 with contoured over plate 200 in position. The BOAS segment 300 includes a base 310 having a radial outer surface 312 and a radial inner surface 315. Segment 300 further includes a forward flange structure 320 and an aft flange structure 330. These two flange structures each extend from the radial outer surface 312 of the base 310. The base 310 and flanges 320, 330 are made of a CMC material comprising a plurality of ceramic fiber plies and a ceramic matrix.

Base 310 is provided with a cooling cavity 360. The cooling cavity 360 extends from the outer radial surface 312 of the base 310 into an interior region of the base 310 and has a cavity opening 362 at the outer radial surface of the base. The cooling cavity 360 is defined by cavity side walls 364 and a cavity bottom wall 366. Additionally, in this embodiment, the cooling cavity 360 includes one or more cooling air outlets 365 to provide for the discharge of cooling air from the cooling cavity. As described above for Fig. 2, cooling air outlets 365 can discharge cooling air through the radial inner surface 315 to provide a cooling gas film for the radial inner surface 315 or can discharge cooling air through a side wall of base 310 to cool a region between adjacent BOAS segments.

The cavity opening 362 of cooling cavity 360 is covered by cover plate 200. The edge region 210 of the cover plate 200 rests on the outer radial surface 312 of the base 310. The central recessed region 220 extends into cooling cavity 360. Cooling air inlets 250 are formed in side walls 230 and/or bottom wall 240 of the central recessed region 220. As shown in this embodiment, each side wall 230 of the central recessed region 220 is uniformly spaced from a corresponding cavity side wall 364 at a distance "a" and the bottom wall 240 of the central recessed region 220 is uniformly spaced from the cavity bottom wall 366 at a distance "b". The distances "a" and "b" can be the same or different and can vary as desired depending, for example, on the CMC component involved. For example, distances "a" and "b" can each, independently, be within the range of 0.005 to 0.5 inches (0.127 to 12.7 mm) such as 0.01 to 0.5 inches (0.254 to 12.7 mm), 0.01 to 0.25 inches (0.254 to 6.35 mm), 0.01 to 0.2 inches (0.254 to 0.508 mm), 0.01 to 0.1 inches (0.254 to 2.54 mm), 0.05 to 0.1 inches (1.27 to 2.54 mm), 0.01 to 0.08 inches (0.254 to 2.03 mm), or 0.025 to 0.075 inches (0.635 to 1.91 mm). It should be noted that the side walls 230 can also abut the side walls 364 of the cooling cavity such that distance "a" is zero.

In operation, cooling air can pass from the region above cover plate 200 and through cooling air inlets 250 positioned in either (or both) the side walls 230 and the bottom wall 240 of the central recessed region 220. The cooling air passing through each of the cooling air inlets 250 will thus impinge on the cooling cavity wall opposite the cooling air inlet, i.e., the cavity side walls 364 or the cavity bottom wall 366.

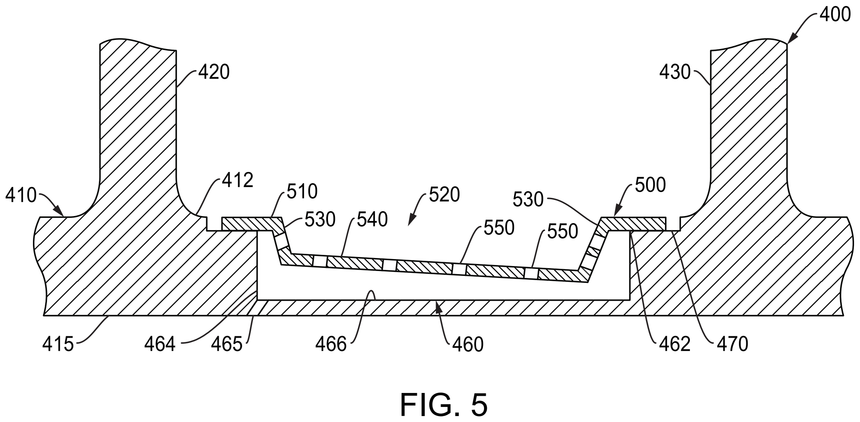

Fig. 5 shows several modifications of the BOAS segment with contoured over plate of Fig. 4. Fig. 5 shows a cross section of BOAS segment 400 which includes a base 410 having a radial outer surface 412 and a radial inner surface 415. Segment 400 further includes forward and aft flange structures 420, 430 which each extend from the radial outer surface 412. Base 410 is provided with a cooling cavity 460 having a cavity opening 462. The cooling cavity 460 is defined by cavity side walls 464 and a cavity bottom wall 466. Additionally, in this embodiment, the cooling cavity 460 includes one or more cooling air outlets 465 to provide for the discharge of cooling air from the cooling cavity.

Cavity opening 462 is covered by cover plate 500. In this embodiment, an edge region 510 of the cover plate 500 rests on a shoulder 470 formed in the outer radial surface 412 around the perimeter of cooling cavity 460. A central recessed region 520 of cover plate 500 extends into cooling cavity 460. As shown in this embodiment, cooling air inlets 550 are formed in both the bottom wall 540 and the side walls 530 of the central recessed region 520.

In this embodiment, the side walls 530 of the central recessed region 520 are angled such that the distance between each side wall 530 and a corresponding cavity side wall 464 varies in a radial direction. Similarly, the bottom wall 540 of the central recessed region 520 is angled such that the distance between the bottom wall 540 and cavity bottom wall 466 varies in an axial direction. For example, the distance between each side wall 530 and a corresponding cavity side wall 464 can vary within the range of 0.005 to 0.5 inches (0.127 to 12.7 mm) such as 0.01 to 0.5 inches (0.254 to 12.7 mm), 0.01 to 0.25 inches (0.254 to 6.35 mm), 0.01 to 0.2 inches (0.254 to 0.508 mm), 0.01 to 0.1 inches (0.254 to 2.54 mm), 0.05 to 0.1 inches (1.27 to 2.54 mm), 0.01 to 0.08 inches (0.254 to 2.03 mm), or 0.025 to 0.075 inches (0.635 to 1.91 mm). Similarly, the distance between the bottom wall 540 and cavity bottom wall 466 can, for example, vary within the range of 0.005 to 0.5 inches (0.127 to 12.7 mm) such as 0.01 to 0.5 inches (0.254 to 12.7 mm), 0.01 to 0.25 inches (0.254 to 6.35 mm), 0.01 to 0.2 inches (0.254 to 0.508 mm), 0.01 to 0.1 inches (0.254 to 2.54 mm), 0.05 to 0.1 inches (1.27 to 2.54 mm), 0.01 to 0.08 inches (0.254 to 2.03 mm), or 0.025 to 0.075 inches (0.635 to 1.91 mm).

The contoured cover plate in accordance with the present disclosure provides an efficient means and method for directing cooling air within cooling cavities in the interior of CMC components and the utilization of the cooling capability of the cooling air flow. Using the contoured structure, targeted cooling of the surfaces opposite the cover plate can be achieved by controlling the distance between the cooling inlets through the cover plate and the surface to be cooled. One or more surfaces (walls) can be cooled uniformly or cooling can be targeted such that certain regions of a surface or surfaces receive a greater degree of cooling. By controlling the cooling flow into and within cooling cavities one can increase the efficiency of the utilization of the cooling air.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A ceramic matrix composite (CMC) component (100; 300; 400) comprising:
a base (110; 310; 410) having a radial outer surface (112; 312; 412) and a radial inner surface (115; 315; 415), the base (110; 310; 410) comprising a plurality of ceramic fiber plies and a ceramic matrix,
at least one cooling cavity (160; 360; 460) within the base (110; 310; 410) that extends from the radial outer surface (112; 312; 412) of the base (110; 310; 410) into an interior region of the base (110; 310; 410), the at least one cooling cavity (160; 360; 460) having a cavity opening (162; 362; 462) at the outer radial surface (112; 312; 412) of the base (110; 310; 410), and the at least one cooling cavity (160; 360; 460) being defined by cavity side walls (164; 364; 464) and a cavity bottom wall (166; 366; 466), and
a cover plate (170; 200; 500) covering the cavity opening (162; 362; 462) of the at least one cooling cavity (160; 360; 460), the cover plate (170; 200; 500) comprises an edge region (210; 510) around the perimeter of the cover plate (170; 200; 500) which is in contact with the base (110; 310; 410) and a central recessed region (220; 520) which extends into the cooling cavity (160; 360; 460), the central recessed region (220; 520) is defined by side walls (230; 530) and a bottom wall (240; 540) wherein each side wall (230; 530) of the central recessed region (220; 520) is spaced from a corresponding cavity side wall (164; 364; 464) and the bottom wall (240; 540) of the central recessed region (220; 520) is spaced from the cavity bottom wall 166; (366; 466), and the central recessed region (220; 520) has a plurality of cooling air inlets (250; 550) to permit cooling air to flow from a region above the cover plate (170; 200; 500) into the cooling cavity (160; 360; 460).

2. The CMC component to according to claim 1, wherein the plurality of cooling air inlets (250; 550) are in the bottom wall (240; 540) of the recessed region (220; 520).

3. The CMC component to according to claim 1 or 2, wherein cooling air inlets (250; 550) are provided in both the side walls (230; 530) and the bottom wall (240; 540) of the recessed region (220; 520).

4. The CMC component according to claim 1, 2 or 3, wherein the base (110; 310; 410) further includes at least one cooling air outlet channel (165) that provides fluid communication between an interior of the at least one cooling cavity (160; 360; 460) beneath the cover plate (170; 200; 500) and an exterior of the CMC component (100; 300; 400), and/or wherein the cover plate (170; 200; 500) is made from a metallic material or a ceramic matrix composite material.

5. The CMC component to according to any preceding claim, wherein the distance between the bottom wall (240; 540) of the recessed region (220; 520) and the cavity bottom wall (166; 366; 466) is uniform.

6. The CMC component to according to any of claims 1 to 4, wherein the distance between the bottom wall (240; 540) of the recessed region (220; 520) and the cavity bottom wall (166; 366; 466) varies.

7. The CMC component to according to any preceding claim, wherein the distance between each side wall (230; 530) of the recessed region (220; 520) and the corresponding cavity side wall (164; 364; 464) is uniform.

8. The CMC component to according to any of claims 1 to 6, wherein the distance between each side wall (230; 530) of the recessed region (220; 520) and the corresponding cavity side wall (164; 364; 464) varies.

9. The CMC component to according to any preceding claim, wherein the distance between the bottom wall (240; 540) of the recessed region (220; 520) and the cavity bottom is 0.005 to 0.5 inches (0.127 to 12.7 mm), and/or wherein the distance between each side wall (230; 530) of the recessed region (220; 520) and the corresponding cavity side wall (164; 364; 464) is 0.005 to 0.5 inches (0.127 to 12.7 mm).

10. The CMC component to according to any preceding claim, wherein the edge region (210; 510) of the cover plate (170; 200; 500) contacts the radial outer surface (112; 312; 412) of the base (110; 310; 410), or wherein the edge region (510) of the cover plate (500) contacts a shoulder region (470) radially formed in the outer surface (412) of the base (410) and surrounding the at least one cooling cavity (460).

11. The CMC component according to any preceding claim, wherein the component is a combustor liner or a blade outer air seal (BOAS) segment (100; 300; 400).

12. A BOAS assembly comprising a plurality of BOAS segments (100; 300; 400), each according to the CMC component (100; 300; 400) of any of claims 1 to 10, wherein the BOAS segments (100; 300; 400) are arranged to form an annular shaped structure.

13. A method of controlling cooling air flow within a CMC component, the method comprising:
providing a CMC component (100; 300; 400) comprising:
a base (110; 310; 410) having a radial outer surface (112; 312; 412) and a radial inner surface (115; 315; 415), the base (110; 310; 410) comprising a plurality of ceramic fiber plies and a ceramic matrix, and
at least one cooling cavity (160; 360; 460) within the base (110; 310; 410) that extends from the radial outer surface (112; 312; 412) of the base (110; 310; 410) into an interior region of the base (110; 310; 410), the at least one cooling cavity (160; 360; 460) having a cavity opening (162; 362; 462) at the outer radial surface (112; 312; 412) of the base (110; 310; 410), and the at least one cooling cavity (160; 360; 460) being defined by cavity side walls (164; 364; 464) and a cavity bottom wall (166; 366; 466), and
covering the cavity opening (162; 362; 462) of the at least one cooling cavity (160; 360; 460) with a cover plate (170; 200; 500), the cover plate (170; 200; 500) comprising an edge region (210; 510) around the perimeter of the cover plate (170; 200; 500) which is in contact with the base (110; 310; 410) of the CMC component (100; 300; 400), and a central recessed region (220; 520) which extends into the cooling cavity (160; 360; 460),
wherein the central recessed region (220; 520) is defined by side walls (230; 530) and a bottom wall (240; 540) wherein each side wall (230; 530) of the central recessed region (220; 520) is spaced from a corresponding cavity side wall (164; 364; 464) and the bottom wall (240; 540) of the central recessed region (220; 520) is spaced from the cavity bottom wall (166; 366; 466), and the central recessed region (220; 520) has a plurality of cooling air inlets (250; 550) to permit cooling air to flow from a region above the cover plate (170; 200; 500) into the cooling cavity (160; 360; 460).

14. The method to according to claim 13, wherein the plurality of cooling air inlets (250; 550) are in the bottom wall (240; 540) of the recessed region (220; 520), and/or wherein cooling air inlets (250; 550) are provided in both the side walls (230; 530) and the bottom wall (240; 540) of the recessed region (220; 520).

15. A turbine engine (20) comprising:
a fan section (22), a compressor section (24), a combustion chamber (26), and a turbine section (28), the turbine section (28) including at least one rotor and one or more turbine blade(s) extending radially outwardly from the at least one rotor; and
a blade outer air seal assembly positioned between the one or more turbine blade(s) and an outer casing to the engine (20);
wherein the blade outer air seal assembly is formed of a plurality blade outer air seal segments (100; 300; 400), each blade outer air seal segment (100; 300; 400) according to the CMC component (100; 300; 400) of any of claims 1 to 10.
